Europäisches Patentamt

(19) European Patent Office

Office européen des brevets

(11) Publication number : **0 387 037 B1**

## (12) EUROPEAN PATENT SPECIFICATION

(45) Date of publication of patent specification :
**15.06.94 Bulletin 94/24**

(51) Int. Cl.⁵ : **B29D 17/00,** G11B 7/00,
**B29C 43/24**

(21) Application number : **90302439.6**

(22) Date of filing : **07.03.90**

(54) **Process for preparing optical recording medium using a forming roll for a substrate.**

(30) Priority : **10.03.89 JP 56024/89**

(43) Date of publication of application :
**12.09.90 Bulletin 90/37**

(45) Publication of the grant of the patent :
**15.06.94 Bulletin 94/24**

(84) Designated Contracting States :
**DE FR GB IT**

(56) References cited :
EP-A- 0 288 580
FR-A- 2 089 024
US-A- 2 529 083
US-A- 3 072 519
US-A- 3 860 473
US-A- 4 294 782

(73) Proprietor : **CANON KABUSHIKI KAISHA
30-2, 3-chome, Shimomaruko,
Ohta-ku
Tokyo (JP)**

(72) Inventor : **Kanome, Osamu
147-101, Idanakano-machi,
Nakahara-ku
Kawasaki-shi, Kanagawa-ken (JP)**
Inventor : **Sugata, Hiroyuki
6-1-215 Nishi Tsuruma 3-Chome
Yamato-shi, Kanagawa-ken (JP)**

(74) Representative : **Beresford, Keith Denis Lewis
et al
BERESFORD & Co.
2-5 Warwick Court
High Holborn
London WC1R 5DJ (GB)**

## Description

The present invention provides a process for producing a substrate sheet for an optical recording medium and a process for producing an optical recording medium.

Substrates for optical recording media have hitherto been prepared by processes such as the injection process, the 2B process, the casting process and the compression process. However, in these processes substrates are formed sheet by sheet so that if the substrates are required to be produced in large quantities at high speed, a large number of machines are required which makes it difficult to produce the substrates inexpensively. There is also a process for continuously preparing substrates for use in optical recording media in which a thermoplastic resin is heated to a temperature not less than its thermal deformation temperature and is then extruded, passed between a pair of forming rolls and formed into a resin sheet of uniform thickness. At the same time preformatting information (e.g. tracking grooves and/or encoded information in the form of readable marks on the roll) is continuously transferred to the resin sheet. Substrate can be mass produced at high speed by this process. In order to prepare a forming roll for use in such a process, one method is known in which preformatting information is directly formed on a roll substrate, and another method is known in which a thin stamper is adhered to a roll substrate through an adhesive or the like. It is preferred to adhere a stamper having a pattern of preformatting information on the roll surface because it facilitates the production of substrates for optical recording medium. If a stamper has become broken, it can simply be replaced with a new one which simplifies the maintenance of the substrate forming roll.

In this method, however, when the stamper is fixed on the roll it has to be bent to the shape of the roll surface and hence the pattern on the surface of the stamper can become stretched which sometimes results in the transfer of a deformed pattern to the surface of the substrate. In particular, the pattern may become stretched in the direction of transport of the resin sheet, resulting in the transfer of inaccurate preformatting information to the substrate used for the optical recording medium. This has given rise to the problem that auto-tracking may fail to operate, particularly in the case where the optical disc is to be rotated to high speed.

According to the present invention, a process for producing a substrate sheet for optical recording medium having the features of claim 1 is provided.

A process for preparing an optical recording medium according to the present invention comprises the features of claim 8.

In the above mentioned processes, a stamper which is provided on the surface of a forming roll and which carries a pattern that corresponds with the preformatting information is less subject to pattern deformation, so that accuracy of transfer of the preformatting information to the recording medium is improved.

Namely, according to the present invention, the product of the thickness "t" of the stamper and the length "Q" of the transfer pattern is set to be not more than 0.1 time the radius "r" of the roll substrate. This enables suppression of the deformation of the pattern on the surface of the stamper when the stamper is fixed on the surface of the roll substrate. Thus, optical recording mediums having accurate preformatting information can be continuously prepared.

## BRIEF DESCRIPTION OF THE DRAWINGS

Figs 1A and 1B are a diagrammatic perspective view and a diagrammatic cross section, respectively, of an embodiment of the substrate-forming roll according to the present invention.

Fig. 2 is a diagrammatic cross section to illustrate an embodiment of an apparatus for preparing substrates used for optical recording mediums, in which the substrate-forming roll of the present invention is used.

## DESCRIPTION OF THE PREFERRED EMBODIMENTS

The present invention will be described below in detail with reference to the accompanying drawings.

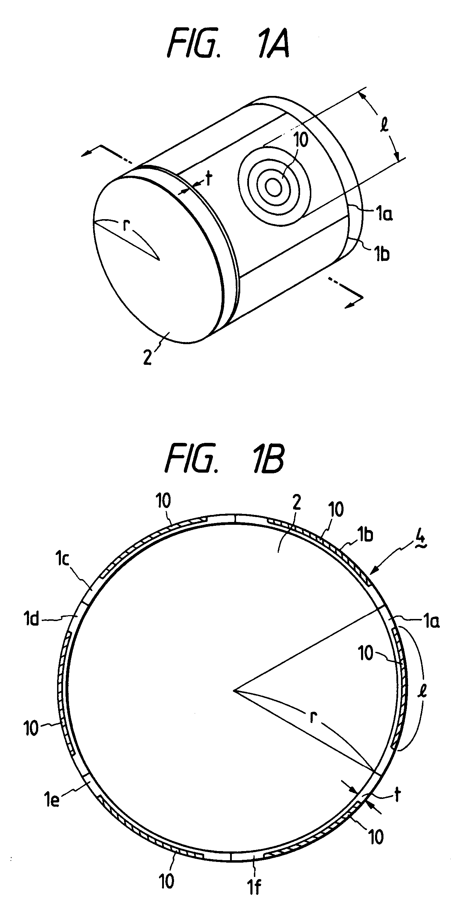

Figs. 1A and 1B are a schematic perspective view and a cross section, respectively, that illustrate an embodiment of the roll for forming a substrate used for an optical recording medium according to the present invention (hereinafter "substrate-forming roll"). In Figs. 1A and 1B, the substrate-forming roll of the present invention comprises stampers 1a to 1f serving as forming members, provided on the surface of a mirror-finished roll substrate 2. The letter symbol "r" is the radius of the roll; "$\ell$", the length of a transfer pattern in the direction perpendicular to the center axis of the roll substrate 2; and "t", the thickness of the stamper. In the substrate-forming roll of the present invention, the radius r (mm) of the roll, the length $\ell$ (mm) of the transfer pattern on the stamper and the thickness t (mm) of the stamper may preferably satisfy the condition represented by the following relationship (I).

$$\ell \times t \leq 0.1 \times r \quad \text{(I)}$$

The numeral 10 denotes a region of a preformatting information pattern formed on the stamper.

The amount of deformation on the surface of the stamper, i.e., the strain of the pattern corresponding with the preformatting information formed on the stamper can be minimized when the roll substrate 2 and stampers 1a to 1f satisfy the condition represented by the above relationship (I). For example, the stretch of a pattern in the direction perpendicular to the center axis of the roll substrate 2 can be suppressed to 100 μm or less. Hence, it is possible to continuously prepare substrates used for optical recording mediums having accurate preformatting information, and it is therefore possible to obtain optical recording mediums free from tracking errors and having high quality.

A hitherto commonly known method can be used as the method of preparing the stampers 1a to 1f used in the substrate-forming roll of the present invention. For example, the stamper can be obtained by coating a photo resist on a mirror-finished glass base, and forming a resist pattern having the preformatting information (e.g., tracking grooves and/or encoded information in the form of readable marks) by exposure using a laser cutting machine and development, followed by sputtering of, for example, Ni on the surface for the electroconduction treatment, and thereafter electroforming to increase the thickness of the nickel film to a given thickness, which nickel film is then subjected to grinding and shape processing, and subsequently removed from the glass base and cleaned.

Alternatively, a thin glass sheet is coated with a photo resist, which is exposed by laser cutting and developed to form a resist pattern, which is then subjected to dry etching so that a pattern corresponding with the preformatting information may be directly cut in the glass sheet. This may be used as the stamper.

The thickness "t" of each stamper 1a to 1f may vary depending on the radius "r" of the roll substrate used and the length "$\ell$" of the transfer pattern, but may usually be not more than 1 mm, and particularly preferably from 0.03 to 0.3 mm.

In the present invention, the pattern of preformatting information formed on the stamper refers to, for example, tracking grooves used for optical disks or optical cards, which grooves may be spiral, concentrically circular, or parallel, and have a width of from 0.5 μm to 2 μm, a pitch of 1.0 μm to 5 μm and a depth of from 200 Å to 5,000 Å, in approximation. It may also refer to tracking grooves used for optical disks or optical cards, which grooves may be spiral, concentrically circular, or parallel, and have a width of from 2 μm to 5 μm, a pitch of 8 μm to 15 μm and a depth of from 200 Å to 5,000 Å, in approximation. It may further refer to a pattern corresponding with encoded information such as address pits.

In the present invention, the length "$\ell$" of the pattern on the stamper may vary depending on the optical recording medium to be prepared and also depending on the manner by which the stamper is fitted to the roll substrate 2, but the pattern may usually be formed with a length of from 10 mm to 500 mm, and particularly from 20 mm to 400 mm.

Rolls made of, for example, chromium-plated steel or nickel-plated steel can be used as the mirror-finished roll substrate 2 on which the stampers are fitted.

The radius "r" of the roll substrate 2 may vary depending on the length "$\ell$" of the pattern on the stamper, but may usually be from 40 mm to 1,000 mm, and particularly from 50 mm to 500 mm. The roll substrate is so formed that the radius "r" is not less than $\ell/2\pi$.

Methods of fitting the stampers to the surface of the mirror-finished roll substrate include a method in which the former is adhered to the latter using a heat resistant adhesive, for example, an epoxy adhesive, a polyimide adhesive and a silicone adhesive. The stampers may also be adhered using a low-melting metal. They may also be fitted by a mechanical means such as screw fixing.

Methods of continuously forming the substrates for optical recording mediums by the use of the substrate-forming roll of the present invention include, for example, a method comprising the steps of melting a thermoplastic resin and extruding the molten resin, and pressing the resin, before it cures, using the substrate-forming roll to effect the transfer of the preformatting information.

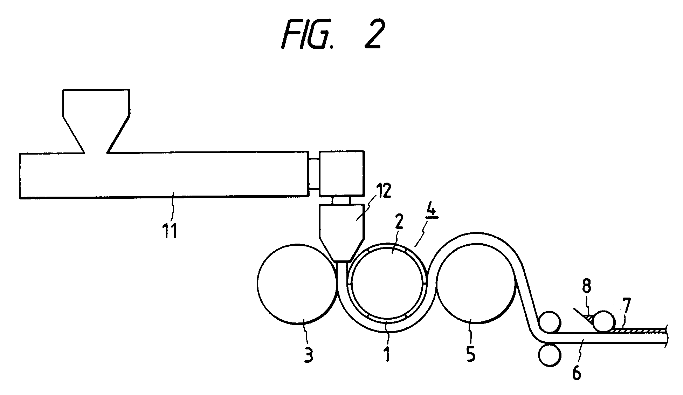

Fig. 2 is a diagrammatic cross section to illustrate an embodiment of a process for preparing substrates used for optical recording mediums, in which the substrate-forming roll of the present invention is used.

In the present invention, resin pellets fed into an extruder 11 are first heated and melted in a barrel of the extruder 11, pressed forward by a screw provided inside the extruder, and then formed into a sheet through a T-die 12. In order to enable accurate transfer of the preformatting information, the T-die may preferably be so disposed that a resin sheet 6 is extruded to the gap between substrate-forming roll 4 and a mirror-finished roll 3.

Next, the resin sheet extruded from the T-die is pressed between the substrate-forming roll 4 and the mirror-finished roll 3, and thus the preformatting information is transferred. Here, the resin sheet 2 may preferably be almost in a molten state. This is because the resin can thereby be sufficiently pressed into the uneven surfaces of the stampers and hence fine patterns can be accurately transferred. For this reason, the T-die may preferably be kept heated to a temperature as high as possible so far as the resin may not burn or scorch, and may preferably heated to a glass transition temperature of the resin (hereinafter "Tg") + 110°C to Tg + 200°C, and particularly Tg + 130°C to Tg + 190°C. In the case of polycarbonate resins, for example, it may preferably be heated to from 260°C to 340°C, particularly from 280°C to 330°C, and more particularly from 290°C to 320°C. In addition, when the resin sheet is cooled between the T-die and substrate-forming roll, the preformatting information may not be satisfactorily transferred, tending to cause double refraction. The distance between the T-die and the point at which the resin sheet is pressed between the substrate-forming roll 4 and the first mirror-finished roll 3 may preferably be 20 cm or less, particularly 15 cm or less, and more particularly 10 cm or less. Their surrounding atmosphere may preferably be kept at a temperature of 60°C or higher.

The apparatus may also preferably have the constitution of vertical extrusion as Fig. 2 shows, where the resin sheet is pressed between the rolls at the point vertically beneath the T-die so that the resin sheet can be extruded exactly to that point. This is because the vertical extrusion enables more exact extrusion, than horizontal extrusion, of the resin sheet to the point it is pressed between the rolls since the resin is nearly in a molten state.

The substrate-forming roll 4 and mirror-finished rolls 3 and 5 may have temperatures commonly used in extrusion of resin sheets, i.e., temperatures of from 100°C to 150°C.

The resin sheet serving as the substrate used for the optical recording medium may have a thickness which may be varied by changing the distance between the mirror-finished rolls 3 and 5. However, in view of the advantages that little strain may be produced inside the resin sheet and the uneven (land-and-groove) preformat on the substrate-forming roll can be transferred with good performance, the resin sheet may preferably have a thickness of from 0.2 mm to 2.0 mm, and particularly from 0.4 mm to 1.5 mm. The rolls 3, 4 and 5, determining the thickness of this sheet, are so set as to be as parallel as possible to each other in order to prevent the irregularities in sheet thickness that may cause errors in recording and reproduction. Stated specifically, assuming as $\theta$ the angle formed by the axis of each roll, it is preferred that tan $\theta$ is $5 \times 10^{-3}$ or less, and particularly $1 \times 10^{-3}$ or less.

The double refraction of the resin sheet brings about a great trouble when an energy beam used for the recording and reproduction is made incident from the substrate side. Hence, the double refraction of the resin sheet should preferably be controlled to be 50 nm or less, particularly 30 nm or less, more particularly 20 nm or less, and most particularly 15 mm or less, per single pass in terms of the wavelength of light used for the recording and/or reproduction.

Subsequently, a recording layer 7 capable of recording and/or reproducing information by the action of light is formed on the resin sheet having the preformatting information obtained in the way as described above.

When the recording layer is formed by coating on the resin sheet, the resin sheet may preferably have a flatness of 10 mm or less, usually 5 mm or less, particularly 3 mm or less, and more particularly 1 mm or less.

Incidentally, in order to decrease the double refraction and improve the flatness, of the resin sheet, the amount of extrusion to form the resin sheet may preferably be accurately controlled. It is also preferred to cause no tension to be applied to, and no sag to be produced in, the resin sheet in the course of the formation of the preformatting information. This can be achieved by adjusting the rotational speeds of the substrate-forming roll 4 and the third roll mirror-finished roll 5. Assuming the rotational speed of the substrate-forming roll as $\omega_4$, and the rotational speed of the mirror-finished roll 5 as $\omega_5$, the speed ratio $\omega_4/\omega_5$ of the rotational speeds (peripheral speeds) of the rolls may preferably be $1.0 < \omega_4/\omega_5 \leqq 1.004$, particularly $1.001 < \omega_4/\omega_5 \leqq 1.003$, and more particularly $1.001 < \omega_4/\omega_5 \leqq 1.0025$.

When $\omega_4/\omega_5$ is 1 or less, a tension is applied to the resin sheet to cause the double refraction, resulting in unsatisfactory transfer of the preformatting information. On the other hand, when $\omega_4/\omega_5$ is more than 1.004, the double refraction may occur with difficulty, but the flatness of the resin sheet is lowered and also the resin sheet tends to slip on the substrate-forming roll, resulting in a lowering of the transfer accuracy of the preformatting information.

As to the delivery speed of the resin sheet, the resin sheet may preferably be delivered at a speed that may not cause the resin to cure before formation of the preformatting information and also may not result in uneven transfer of the preformatting information. On the other hand, in the course of the coating consecutively carried out to form the recording layer on the resin sheet, the delivery speed of the resin sheet may preferably be controlled to a speed that enables formation of the recording layer with an always uniform thickness. In this regard, stated specifically as the speed that enables accurate transfer of the preformatting information and also enables uniform formation of the recording layer, the delivery speed of the resin sheet may preferably range from 0.3 m/min to 10 m/min, particularly from 0.5 m/min to 5 m/min, and more particularly from 1 m/min to 4 m/min.

As coating methods to form the recording layer, methods such as roll coating, gravure coating, curtain coating, spray coating, dip coating, bar coating, and blade coating may be used.

The recording layer formed here may preferably have a thickness ranging from 500 Å to 5,000 Å. A drying step to remove a solvent is usually provided after the coating step for the recording layer. In the present invention, however, the step of drying the recording layer can be omitted or simplified if a solution of recording layer materials is applied after the preformatting information of the resin sheet to which the preformatting information has been transferred is fixed and before cooled to room temperature. The whole step can thus be more simplified.

Even in such an instance, however, the recording layer may preferably be formed by coating after the surface temperature of the resin sheet which has been extruded and on which the preformatting information has been formed has become not higher than 50°C, and particularly not higher than 40°C. This is because there is a possibility of formation of cracks on the surface of the substrate because of the solvent in the coating solution for the recording layer.

As resins used as materials for the substrate, thermoplastic resins having a high transmission to the light used for recording and reproduction are preferred, including, for example, acrylic resins, polyester resins, polycarbonate resin, vinyl resins, polysulfone resins, polyolefin resins, and cellulose resins.

The organic coloring matter used in the recording layer may preferably show a great difference in reflectance to energy beams of reproducing light, between the pits, serving as recorded areas, and the unrecorded areas. For carrying out recording, it may also preferably have a great absorption in the wavelength region of recording light. It may still also preferably require a smaller energy necessary for causing changes in reflectance as a result of irradiation with energy beams. It may further preferably cause changes in reflectance with difficulty, at the recorded areas (pits, etc.) and unrecorded areas.

Such a coloring matter includes, for example, anthraquinone derivatives (particularly those having an indanthrene skeleton), dioxazine compounds and derivatives thereof, triphenodithiazine compounds, phenanthrene derivatives, cyanine compounds, merocyanine compounds, pyrylium compounds, xanthene compounds, triphenylmethane compounds, croconium coloring matters, azo coloring matters, crocones, azines, indigoids, polymethine coloring matters, azulenes, squarilium derivatives, sulfur dyes, and metal dithiolato complexes.

These coloring matters may also be mixed with a stabilizer. Such stabilizer include various types of metal chelate compounds, in particular, those comprising a multidentate ligand having a central metal such as Zn, Cu, Ni, Cr, Co, Mn, Pd or Zr, as exemplified by tetradentate ligands having $N_4$, $N_2O_2$, $N_2S_2$, $S_4$, $O_2S_2$, $O_4$, etc., or a combination of these, as well as various types of aromatic amines or diamines, nitrogen-containing aromatics, and onium salts thereof as exemplified by aminium salts, diimonium salts, pyridinium salts, imidazolinium salts, and quinolium salts. Pyrylium salts or the like which are salts of oxygen-containing aromatics may also be used. These stabilizers can be used in combination of plural ones.

The above various stabilizers are selected taking account of the compatibility with the above organic coloring matters and solvents used. The stabilizer may preferably be added in an amount of from 1 wt.% to 50 wt.% based on the organic coloring matter. In particular, when added in an amount of from 10 wt.% to 30 wt.%, the lowering of sensitivity can be small and the effect as the stabilizer can be high.

The solvent used in dissolving the above organic coloring matter and stabilizer may preferably be such one that does not attack the resin sheet. For example, there can be used diacetone alcohol, cellosolve, 1-methoxy-2-propanol, and mixed solvents composed of any of the above solvents to which a solvent of a halogen type has been added in a small amount.

The sheet-like optical recording medium prepared in this way is then cut or punched out to be formed into individual optical disks or optical cards.

Incidentally, in the present invention, the step of forming a protective member on the surface at which the recording layer has been formed and the step of cutting into individual recording mediums the optical recording medium sheet having the recording layer and the protective member may be continuously provided subsequent to the forming of the recording layer. This is particularly effective in view of the advantages that dust can be almost completely prevented from invading the optical recording mediums, and more highly reliable optical recording mediums can be obtained.

As having been described above, in the substrate-forming roll and the process for preparing the optical recording medium according to the present invention, the substrate-forming roll used in continuously producing the substrates for optical recording mediums is formed in such a manner that relationship between the radius "r" mm of the roll substrate, the length "$\ell$" mm of the transfer pattern of the stamper, and the thickness "t" mm of the stamper is so set as to be $\ell \times t \leqq 0.1 \times r$. Thus, it has become possible to transfer the pattern of the stamper used for the forming, free from deformation, to the substrate in a good accuracy. This has also made it possible to decrease a fraction defective in the forming of substrates, and to manufacture optical recording mediums free from tracking errors or the like and having a high quality, at a low cost.

In particular, the present invention can be remarkably effective in continuously manufacturing such optical disks that are rotated at a high speed of, for example, from 1,000 rpm to 3,600 rpm, and particularly from 1,800 rpm to 3,600 rpm, at the time of recording and reproduction.

EXAMPLES

The present invention will be described below in greater detail by giving Examples.

Example 1

Optical recording mediums were continuously prepared using a substrate-forming roll comprising a stamper made of nickel and a roll substrate made of nickel-plated steel, where the length "$\ell$" of a transfer pattern was 86 mm, the thickness "t" of the stamper was 0.1 mm and the radius "r" of the roll substrate was 100 mm. The relationship of these is:

$$\ell \times t = 86 \times 0.1 = 8.6,$$
$$0.1 \, r = 0.1 \times 100 = 10.0,$$
$$8.6 = \ell \times t < 0.1 \, r = 10.0,$$

satisfying the condition in the equation (I). On the stamper, a pattern corresponding with a track groove of a spiral form was formed in the region defined between an inner diameter of 46 mm and an outer diameter of 82 mm. Two sheets of this stamper were stuck on the above roll substrate, using an epoxy adhesive (trade name: TE-1710; a product of Toray Industries, Inc.). A substrate-forming roll was thus prepared.

Using the resulting substrate-forming roll, an apparatus for preparing optical disks, as shown in Fig. 2, was set up.

Polycarbonate (number average molecular weight: 35,000; trade name: Panlite L-1250; a product of Teijin Chemicals Ltd.) was used as the resin pellet for forming a substrate material

The temperature of the T-die 12 was set to be 295°C; the extrusion width, 200 mm, the diameters and thicknesses of the substrate-forming roll 4 and the mirror-finished rolls 3 and 5, each 300 mm in diameter and 400 mm in length; and the distance between the substrate-forming roll 4 and mirror-finished roll 3 and the distance between the substrate-forming roll 4 and mirror-finished roll 5, each 1.20 mm. The rotational speeds $\omega_4$ and $\omega_3$ of the substrate-forming roll 4 and mirror-finished roll 3 were made equal. The ratio $\omega_4/\omega_5$ of the rotational speed of the roll 4 ($\omega_4$) to the rotational speed of the roll 5 ($\omega_5$) was set to be 1.004.

The distance between the T-die and the point at which the resin sheet is pressed between the substrate-forming roll 4 and the mirror-finished roll 3 was set to be 7.5 cm, and the resin sheet was delivered at a speed of 2 m/min.

In this way, a resin sheet to be formed into substrates for optical recording mediums and to which 100 patterns for optical disks were transferred was obtained. Next, in respect of the patterns for optical disks, transferred to the resin sheet, the amount of stretch of the outer diameter of each track groove in the direction of extrusion was measured to reveal that it ranged from 34 to 73 µm.

Subsequently, using a diacetone alcohol solution containing 3 wt.% of a polymethine coloring matter (trade name: IR-820; a product of Nippon Kayaku Co., Ltd.) as a recording layer coating solution 8, the solution was applied to the pattern-formed surface of the resin sheet so as to give a dry coating thickness of 1,000 Å. After the coating thus formed was dried, the resulting resin sheet was cut into doughnuts of 15 mm in inner diameter and 86 mm in outer diameter each. One hundred (100) sheets of optical disks were thus prepared.

On each of the optical disks thus obtained, reproduction was carried out using an optical disk drive (trade name: OMS1000 Type 3; manufactured by Nakamichi K.K.; number of revolutions: 1,800 rpm; wavelength of reproducing light: 830 nm). As a result, no tracking servo error occurred at all.

Example 2

Optical recording mediums were continuously prepared using a substrate-forming roll comprising a stamper made of nickel and a roll substrate made of chromium-plated steel, where the length "$\ell$" of a transfer pattern was 130 mm, the thickness "t" of the stamper was 0.1 mm and the radius "r" of the roll substrate was 150 mm. The relationship of these is:

$$\ell \times t = 13 < 15 = 0.1 \, r,$$

satisfying the condition in the equation (I).

A pattern on the stamper corresponded with a track groove of a spiral form with a pitch of 1.6 µm. The ratio of a land to a groove was 1. The pattern was formed in the region defined between an inner diameter of 58 mm and an outer diameter of 122 mm. Three sheets of this stamper were adhered to the surface of a mirror-finished roll substrate of 150 mm in radius, made of chromium-plated steel, in the same manner as in Example 1. A substrate-forming roll was thus prepared. Using the resulting substrate-forming roll, 100 patterns for optical disks were transferred to the resin sheet in the same manner as in Example 1. In respect of each optical disk, the amount of stretch of the outer diameter of the track groove in the direction of extrusion was measured to reveal that it ranged from 38 to 77 µm.

Subsequently, in the same manner as in Example 1, a recording layer was formed, 100 sheets of optical recording mediums were thus prepared, and reproduction was carried out using the optical disk drive. As a result, no tracking servo error occurred at all.

Comparative Example 1

Example 1 was repeated to prepare optical recording mediums, except that the thickness of the stamper was set to be t = 0.15 mm. The relationship is:

$$\ell \times t = 86 \times 0.15 = 12.9,$$
$$0.1 \times r = 0.1 \times 100 = 10.0,$$
$$\ell \times t > 0.1 \, r,$$

thus not satisfying the condition in the equation (I).

In respect of 100 patterns for optical disks, transferred to the resin sheet using the above substrate-forming roll, the amount of stretch of the outer diameter in the direction of extrusion of the resin sheet was measured to reveal that it ranged from 100 to 142 µm. Next, on the optical disks prepared, reproduction was carried out using the optical disk drive. As a result, tracking servo errors occurred in all the optical disks.

Comparative Example 2

Example 2 was repeated to prepare a substrate-forming roll, except that the radius "r" of the roll substrate 2 was set to be 100 mm. Using this substrate-forming roll, Example 2 was further repeated to prepare optical recording mediums, except that rolls of 200 mm in diameter were used as the mirror-finished rolls 3 and 5. Here, in respect of the patterns for optical disks, transferred to the resin sheet, the amount of stretch of the outer diameter of the pattern was revealed to range from 105 μm to 161 μm. Next, on the optical disks prepared, reproduction was carried out using the optical disk drive. As a result, tracking errors occurred in all the optical disks.

**Claims**

1. A process for producing a substrate sheet for an optical recording medium, comprising the steps of melt-extruding a polycarbonate resin to form a softened extruded polycarbonate resin sheet, passing said resin sheet almost in a molten state under pressure between a substrate-forming roll (4) having a pattern corresponding with preformatting information of the optical recording medium and a roll (3, 5) disposed opposite to said substrate-forming roll so as to form a substrate sheet (6) having a thickness of from 0.2mm to 2mm with the pattern transferred to a surface of the resin sheet, characterized in that:
   (a) said substrate-forming roll has a roll substrate (2) having a stamper (1) on which the pattern has been formed;
   (b) assuming the radius of said roll substrate as "r"mm, the length of said pattern in the peripheral direction of said roll substrate as "$\ell$"mm and the thickness of said stamper as "t"mm, they satisfy the relationship of
   $\ell$ x t ≦ 0.1 x r (provided that r ≧ $\ell/2\pi$)
   (c) the radius "r" of said roll-substrate ranges from 50mm to 500mm, and
   (d) the delivery speed of the resin sheet ranges from 0.5m/min to 5m/min.

2. A process according to claim 1, wherein the length 1, of the pattern formed on said stamper in the direction perpendicular to the center axis of said roll substrate ranges from 10 mm to 500 mm.

3. A process according to claim 2, wherein the length $\ell$ of the pattern formed on said stamper ranges from 20mm to 400mm.

4. A process according to any preceding claim, wherein the thickness "t" of said stamper is not less than 0.01mm and not more than 1mm.

5. A process according to claim 4, wherein the thickness "t" of said stamper is not less than 0.03mm and not more than 0.3mm.

6. A process according to any preceding claim, wherein the stamper has a pattern corresponding with an optical disk tracking groove of a spiral form or grooves in the form of concentric circles.

7. A process according to any preceding claim, wherein said stamper is fixed on said roll substrate by means of an expoxy adhesive.

8. A process for producing an optical recording medium, comprising the steps of melt-extruding a polycarbonate resin to form a softened extruded polycarbonate resin sheet, passing said resin sheet almost in a molten state under pressure between a substrate-forming roll (4) having a pattern corresponding with the preformatting information of the optical recording medium and a roll (3, 5) disposed opposite to said substrate-forming roll, thereby to form a substrate sheet (6) having a thickness of from 0.2mm to 2mm with the pattern transferred to a surface of the resin sheet forming a recording layer on said substrate sheet to form an optical recording medium sheet and cutting an individual optical recording medium from said optical recording medium sheet, characterized in that
   (a) said substrate-forming roll has a roll substrate (2) having a stamper (1) on which the pattern has been formed;
   (b) assuming the radius of said roll substrate as "r" mm, the length of said pattern in the peripheral direction of said roll substrate as "l"mm and the thickness of said stamper as "t"mm, they satisfy the relationship of
   $\ell$ x t ≦ 0.1 x r (provided that r ≧ $\ell/2\pi$)
   (c) the radius "r" of said roll-substrate ranges 50mm to 500mm, and
   (d) the delivery speed of the resin sheet ranges from 0.5m/min to 5m/min.

9. A process according to claim 8, wherein the length 1, of the pattern formed on said stamper, in the direction perpendicular to the center axis of said roll substrate ranges from 10mm to 500mm.

10. A process according to claim 9, wherein the length $\ell$ of the pattern formed on said stamper ranges from 20mm to 400mm.

11. A process optical recording medium according to claim 8, 9 or 10, wherein the thickness "t" of said stamper is not less than 0.01mm and not more than 1mm.

12. A process according to claim 11, wherein the thickness "t" of said stamper is not less than 0.03mm and not more than 0.3mm.

13. A process according to any of claims 8 to 12, wherein said stamper has a pattern corresponding with an optical disk tracking groove of a spiral form or grooves in the form of concentric circles.

14. A process according to any of claims 8 to 13, wherein said stamper is fixed on said roll substrate by means of an epoxy adhesive.

## Patentansprüche

1. Verfahren zur Herstellung einer Trägerschichtfolie für ein optisches Aufzeichnungsmittel, mit den Schritten, eine Polycarbonatharzschmelze zu extrudieren, um eine aufgeweichten extrudierten Polycarbonatharzfolie zu formen, und die Harzfolie in einem nahezu geschmolzenen Zustand zwischen einer Trägerschichtformwalze (4), die ein mit den vorformatierten Informationen des optischen Aufzeichnungsmittels übereinstimmendes Muster hat, und einer gegenüber zu der Trägerschichtformwalze angeordneten Walze (3, 5) unter Druck durchzulassen, um so eine Trägerschichtfolie (6) mit einer Stärke von 0,2mm bis 2mm zu formen, wobei das Muster auf eine Oberfläche der Harzfolie übertragen wird, dadurch gekennzeichnet, daß:
   (a) die Trägerschichtformwalze eine Walzenträgerschicht (2) mit einem Stempel (1) hat, auf dem das Muster geformt worden ist;
   (b) unter der Annahme, daß der Radius der Walzenträgerschicht "r"mm, die Länge des Musters in der umfangsseitigen Richtung der Walzenträgerschicht "l" mm und die Stärke des Stempels "t" mm ist, diese die Beziehung $l * t \leqq 0,1 * r$ (vorausgesetzt, daß $r \geqq l/2\pi$ ist) erfüllen;
   (c) der Radius "r" der Walzenträgerschicht im Bereich von 50mm bis 500mm ist, und
   (d) die Fördergeschwindigkeit der Harzfolie im Bereich von 0,5mm/min bis 5m/min ist.

2. Verfahren nach Anspruch 1, wobei die Länge 1 des auf dem Stempel geformten Musters in der zur mittleren Achse der Walzenträgerschicht senkrechten Richtung im Bereich von 10mm bis 500mm ist.

3. Verfahren nach Anspruch 2, wobei die Länge 1 des auf dem Stempel geformten Musters im Bereich von 20mm bis 400mm ist.

4. Verfahren nach jedem der vorstehenden Ansprüche, wobei die Stärke "t" des Stempels nicht weniger als 0,01mm und nicht mehr als 1mm ist.

5. Verfahren nach Anspruch 4, wobei die Stärke "t" des Stempels nicht weniger als 0,03mm und nicht mehr als 0,3mm ist.

6. Verfahren nach jedem der vorstehenden Ansprüche, wobei der Stempel ein Muster hat, das mit einer spiralförmigen Spurkerbe einer optischen Disk oder mit Kerben in der Form konzentrischer Kreise übereinstimmt.

7. Verfahren nach jedem der vorstehenden Ansprüche, wobei der Stempel auf der Walzenträgerschicht mit Hilfe eines Epoxidklebestoffes auf einer Walzenträgerschicht fixiert ist.

8. Verfahren zur Herstellung optischer Aufzeichnungsmittel, mit den Schritten, eine Polycarbonatharzschmelze zu extrudieren, um eine aufgeweichte extrudierte Polycarbonatharzfolie zu formen, und die Harzfolie im nahezu geschmolzenen Zustand zwischen einer Trägerschichtformwalze (4) mit einem mit den vorformatierten Informationen des optischen Aufzeichnungsmittels übereinstimmenden Muster und einer gegenüber der Trägerschichtformwalze angeordneten Walze (3, 5) unter Druck durchzulassen, wodurch eine Trägerschichtfolie (6) mit einer Stärke von 0,2mm bis 2mm geformt wird, wobei das Muster auf eine Oberfläche der Harzfolie übertragen wird, wobei eine Aufzeichnungsschicht auf die Trägerschichtfolie zur Formung einer Folie für optische Aufzeichnungsmittel geformt wird und ein einzelnes optisches Aufzeichnungsmittel aus der Folie für optischen Aufzeichnungsmittel geschnitten wird, dadurch gekennzeichnet, daß
   (a) die Trägerschichtformwalze eine Walzenträgerschicht (2) mit einem Stempel (1) hat, auf dem das Muster geformt worden ist;
   (b) unter der Annahme, daß der Radius der Walzenträgerschicht "r"mm, die Länge des Musters in der umfangsseitigen Richtung der Walzenträgerschicht "l"mm und die Stärke des Stempels "t"mm ist, diese die Beziehung $l * t \leqq 0,1 * r$ (vorausgesetzt, daß $r \geqq l/2\pi$) erfüllen;
   (c) der Radius "r" der Walzenträgerschicht im Bereich von 50mm bis 500mm ist, und
   (d) die Fördergeschwindigkeit der Harzfolie im Bereich von 0,5m/min bis 5m/min ist.

9. Verfahren nach Anspruch 8, wobei die Länge 1 des auf dem Stempel geformten Musters in der zur mittleren Achse der Walzenträgerschicht senkrechten Richtung im Bereich von 10mm bis 500mm ist.

10. Verfahren nach Anspruch 9, wobei die Länge 1 des auf dem Stempel geformten Musters im Bereich von 20mm bis 400mm ist.

11. Verfahren zur Herstellung optischer Aufzeichnungsmittel nach den Ansprüchen 8, 9 und 10, wobei die Stärke "t" des Stempels nicht weniger als 0,01mm und nicht mehr als 1mm ist.

12. Verfahren nach Anspruch 11, wobei die Stärke "t" des Stempels nicht weniger als 0,03mm und nicht mehr als 0,3mm ist.

13. Verfahren nach jedem der Ansprüche 8 bis 12, wobei der Stempel ein Muster hat, das mit einer spiralförmige Spurkerbe einer optischen Disk oder mit Kerben in der Form konzentrischer Kreise übereinstimmt.

14. Verfahren nach jedem der Ansprüche 8 bis 13, wobei der Stempel auf der Walzenträgerschicht mit Hilfe eines Epoxidklebemittels fixiert ist.

## Revendications

1. Procédé pour réaliser une feuille de substrat pour un support d'enregistrement optique, comprenant les étapes d'extrusion par fusion d'une résine de polycarbonate pour former une feuille de résine en polycarbonate extrudé ramollie, de passage de ladite feuille de résine presque à l'état fondu sous pression entre un rouleau (4) de formation de substrat ayant une configuration correspondant à l'information de préformatage du support d'enregistrement optique et un rouleau (3, 5) disposé à l'opposé dudit rouleau de formation de substrat de manière à former une feuille de substrat (6) ayant une épaisseur comprise entre 0,2 mm et 2 mm, la configuration étant transférée sur une surface de la feuille de résine, caractérisé en ce que:

(a) ledit rouleau de formation de substrat a un substrat de rouleau (2) comportant une matrice de pressage (1) sur laquelle la configuration a été formée;
(b) si l'on suppose que le rayon dudit substrat de rouleau est de "r" mm, la longueur de ladite configuration dans la direction périphérique dudit substrat de rouleau est de "1" mm et l'épaisseur de ladite matrice de pressage est de "t" mm, ces grandeurs satisfont à la relation suivante

$$l \times t \leqq 0,1 \times r \text{ (pourvu que } r \geqq l/2\pi)$$

(c) le rayon "r" dudit substrat de rouleau est compris entre 50 mm et 500 mm, et
(d) la vitesse d'alimentation de la feuille de résine se situe entre 0,5 m/min et 5 m/min.

2. Procédé selon la revendication 1, dans lequel la longueur 1 de la configuration formée sur ladite matrice de pressage dans la direction perpendiculaire à l'axe central dudit substrat de rouleau se situe entre 10 mm et 500 mm.

3. Procédé selon la revendication 2, dans lequel la longueur 1 de la configuration formée sur ladite matrice de pressage se situe entre 20 mm et 400 mm.

4. Procédé selon l'une quelconque des revendications précédentes, dans lequel l'épaisseur "t" de ladite matrice de pressage n'est pas inférieure à 0,01 mm et n'est pas supérieure à 1 mm.

5. Procédé selon la revendication 4, dans lequel l'épaisseur "t" de ladite matrice de pressage n'est pas inférieure à 0,03 mm et n'est pas supérieure à 0,3 mm.

6. Procédé selon l'une quelconque des revendications précédentes, dans lequel la matrice de pressage a une configuration correspondant au sillon de suivi de piste d'un disque optique en forme de spirale ou à des sillons en forme de cercles concentriques.

7. Procédé selon l'une quelconque des revendications précédentes, dans lequel ladite matrice de pressage est fixée sur ledit substrat de rouleau au moyen d'un adhésif du type époxy.

8. Procédé de réalisation d'un support d'enregistrement optique, comprenant les étapes d'extrusion par fusion d'une résine de polycarbonate pour former une feuille de résine en polycarbonate ramollie, de passage de ladite feuille de résine presque à l'état fondu sous pression entre un rouleau (4) de formation de substrat ayant une configuration correspondant à l'information de préformatage du support d'enregistrement optique et un rouleau (3, 5) disposé à l'opposé dudit rouleau de formation de substrat, afin de former une feuille de substrat (6) ayant une épaisseur comprise entre 0,2 mm et 2 mm, la configuration transférée sur une surface de la feuille de résine formant une couche d'enregistrement sur ladite feuille de substrat pour former une feuille de support d'enregistrement optique et de découpe d'un support d'enregistrement optique individuel à partir de ladite feuille de support d'enregistrement optique, caractérisé en ce que

(a) ledit rouleau de formation de substrat a un substrat de rouleau (2) ayant une matrice de pressage (1) sur laquelle la configuration a été formée;

(b) si l'on suppose que le rayon dudit substrat de rouleau est de "r" mm, la longueur de ladite configuration dans la direction périphérique dudit substrat de rouleau est de "l" mm et l'épaisseur de ladite matrice de pressage est de "t" mm, ces grandeurs satisfont à la relation suivante

l x t ≦ 0,1 x r (pourvu que r ≧ l/2π)

(c) le rayon "r" dudit substrat de rouleau se situe entre 50 mm et 500 mm, et

(d) la vitesse d'alimentation de la feuille de résine se situe entre 0,5 m/min et 5 m/min.

9. Procédé selon la revendication 8, dans lequel la longueur 1 de la configuration formée sur ladite matrice de pressage, dans la direction perpendiculaire à l'axe central dudit substrat de rouleau, se situe entre 10 mm et 500 mm.

10. Procédé selon la revendication 9, dans lequel la longueur 1 de la configuration formée sur ladite matrice de pressage se situe entre 20 mm et 400 mm.

11. Procédé selon la revendication 8, 9 ou 10, dans lequel l'épaisseur "t" de ladite matrice de pressage n'est pas inférieure à 0,01 mm et n'est pas supérieure à 1 mm.

12. Procédé selon la revendication 11, dans lequel l'épaisseur "t" de ladite matrice de pressage n'est pas inférieure à 0,03 mm et n'est pas supérieure à 0,3 mm.

13. Procédé selon l'une quelconque des revendications 8 à 12, dans lequel ladite matrice de pressage a une configuration correspondant au sillon de suivi de piste d'un disque optique en forme de spirale ou à des sillons en forme de cercles concentriques.

14. Procédé selon l'une quelconque des revendications 8 à 13, dans lequel ladite matrice de pressage est fixée sur ledit substrat de rouleau au moyen d'un adhésif du type époxy.

## FIG. 1A

## FIG. 1B

FIG. 2